(19) Europäisches Patentamt
European Patent Office
Office européen des brevets

(11) **EP 4 636 158 A1**

(12) **EUROPEAN PATENT APPLICATION**
published in accordance with Art. 153(4) EPC

(43) Date of publication:
**22.10.2025 Bulletin 2025/43**

(21) Application number: **23903502.5**

(22) Date of filing: **12.12.2023**

(51) International Patent Classification (IPC):
*D21H 11/18* (2006.01)     *B32B 29/00* (2006.01)
*D04H 1/4391* (2012.01)     *D21H 15/02* (2006.01)
*G10K 11/162* (2006.01)

(52) Cooperative Patent Classification (CPC):
**B32B 29/00; D04H 1/4391; D21H 11/18;
D21H 15/02; G10K 11/162**

(86) International application number:
**PCT/JP2023/044397**

(87) International publication number:
**WO 2024/128218 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 JP 2022198641**

(71) Applicant: **Asahi Kasei Kabushiki Kaisha
Tokyo 1000006 (JP)**

(72) Inventors:
• **TANIGUCHI, Hotaka
Tokyo 100-0006 (JP)**
• **ASAI, Hirotaka
Tokyo 100-0006 (JP)**
• **YAMASAKI, Naoaki
Tokyo 100-0006 (JP)**

(74) Representative: **Dompatent
Partnerschaft von Patent- und Rechtsanwälten
mbB
Deichmannhaus am Dom
Bahnhofsvorplatz 1
50667 Köln (DE)**

(54) **NON-WOVEN FABRIC**

(57)     Provided is a nonwoven fabric that exhibits sound absorption performance and has excellent sound insulation properties in a wide frequency range of 200-2000 Hz. The present invention relates to a nonwoven fabric containing fibrillated fibers and having a tensile modulus of 10 MPa or more, a soundproofing material made of the nonwoven fabric, and a composite soundproofing material made by laminating the soundproofing material and a support.

EP 4 636 158 A1

**Description**

FIELD

The present invention relates to a nonwoven fabric and to a soundproof material and composite soundproof material using it.

BACKGROUND

When an automobile travels it generates various forms of noise including noise from the engine or drive system, road noise, and wind noise. Sound-absorbing materials have conventionally been used for the purpose of inhibiting noise emission in order to suppress such unwanted noise and create a more comfortable indoor automobile space. In recent years, with advances in electric vehicles and increasingly quiet drive systems, sounds that had not previously been considered to be noise have come to be recognized as noise.

Since the frequency of noise depends on its sound source, sound-absorbing materials suitable for different sound sources are used. However, porous sound-absorbing materials that are commonly used in vehicles, such as nonwoven fabrics and foam, while exhibiting an excellent sound absorption coefficient in the high frequency range, tend to have a lower sound absorption coefficient at the low frequency end. It is also known that providing additional layers on the surface of a porous material improves the soundproof quality in all frequency ranges.

For example, PTL 1 describes a textile-type composite sound absorbing material having a foam layer provided as an air permeability-modifying layer on a nonwoven fabric obtained by combining fibers of specific fineness, the material exhibiting an excellent sound absorption property at 800 Hz to 2000 Hz.

PTL 2 discloses a composite sound absorbing material having a spunbond nonwoven fabric spot-bonded on a melamine foamed body using a hot-melt adhesive, and teaches that an excellent sound absorption property is exhibited in all frequency ranges if the thickness is slightly greater than 10 mm.

[CITATION LIST]

[PATENT LITERATURE]

> [PTL 1] Japanese Unexamined Patent Publication No. 2018-154113
> [PTL 2] International Patent Publication No. WO2017/006993

SUMMARY

[TECHNICAL PROBLEM]

The conventional techniques improve sound absorption properties by providing further layers in porous materials, but they have produced almost no effects in terms of sound-insulating properties. As a measure against noise leaking from the interior to the exterior of a vehicle, such as the driving sound of the engine, it is effective to increase the sound-insulating properties rather than the sound absorption properties of the soundproof material.

In light of this situation, the problem to be solved by the invention is to provide a nonwoven fabric that exhibits sound absorption performance while exhibiting excellent sound-insulating properties in a wide frequency range of 200 Hz to 2000 Hz.

[SOLUTION TO PROBLEM]

As a result of much diligent experimentation with the aim of solving this problem, the present inventors have completed this invention upon finding, unexpectedly, that the problem can be solved by including fibrillated fibers and non-fibrillated fibers with specific lengths.

Specifically, the present invention provides the following.

> [1] A nonwoven fabric having a tensile modulus of 10 MPa or higher, and comprising fibrillated fibers.
> [2] The nonwoven fabric according to [1] above, which further comprises non-fibrillated fibers.
> [3] The nonwoven fabric according to [1] or [2] above, wherein the average fiber length of the fibrillated fibers is 25 $\mu$m or greater.

[4] The nonwoven fabric according to [2] or [3] above, wherein the tensile modulus of the non-fibrillated fibers is 5 GPa or higher.

[5] The nonwoven fabric according to any one of [1] to [4] above, wherein the unit thickness flow resistance is 1,400,000 Ns/m$^4$ to 5,000,000,000 Ns/m$^4$.

[6] The nonwoven fabric according to any one of [1] to [5] above, wherein the tortuosity is 1.8 to 12.0.

[7] The nonwoven fabric according to any one of [1] to [6] above, wherein the fibrillated fibers are one or more selected from the group consisting of microfibrillated cellulose, acrylic pulp, aramid pulp, chitin nanofibers, chitosan nanofibers and silk nanofibers.

[8] The nonwoven fabric according to any one of [1] to [7] above, wherein the fibrillation index of the fibrillated fibers is 0.3% or greater.

[9] The nonwoven fabric according to any one of [1] to [8] above, wherein the fibrillated fiber content is 3 mass% to 30 mass% based on the total mass of the nonwoven fabric.

[10] The nonwoven fabric according to any one of [1] to [9] above, wherein the average fiber length of the fibrillated fibers is 200 μm or smaller.

[11] The nonwoven fabric according to any one of [1] to [10] above, wherein the tensile modulus is 40 MPa to 1000 MPa.

[12] The nonwoven fabric according to any one of [2] to [11] above, wherein the tensile modulus of the non-fibrillated fibers is 500 GPa or higher.

[13] A soundproof material comprising a nonwoven fabric according to any one of [1] to [12] above.

[14] A composite soundproof material obtained by layering a soundproof material according to [13] above and a support.

[15] The soundproof material according to [13] above, which is a three-dimensional soundproof material for an automobile.

[16] The soundproof material according to [14] above, which is a three-dimensional soundproof material for an automobile.

[ADVANTAGEOUS EFFECTS OF INVENTION]

According to the invention it is possible to provide a nonwoven fabric comprising fibrillated fibers and having a tensile modulus of 10 MPa or higher, which exhibits excellent sound-insulating properties at 200 Hz to 2000 Hz.

DESCRIPTION OF EMBODIMENTS

Embodiments of the invention will now be explained in detail with the understanding that the invention is not limited to the embodiments.

<Nonwoven fabric>

A nonwoven fabric is a structure that has been formed with a plurality of fibers chemically or physically entangled or bonded together. The nonwoven fabric of the embodiment comprises fibrillated fibers and non-fibrillated fibers, as described below. The nonwoven fabric of the embodiment also encompasses structures that are composed entirely of fibrillated fibers.

(Nonwoven fabric thickness)

The thickness of the nonwoven fabric of the embodiment is preferably 0.05 mm or greater. The thickness of the nonwoven fabric was measured by the following procedure.

(1) A 5 cm × 5 cm size section was obtained from 5 different locations of a sample.
(2) The thickness of each section was measured using an ABS Digimatic Indicator ID-CX (Mitsutoyo Corp.). The probe used was a φ15 mm flat probe.
(3) The average value for the 5 locations obtained in step (2) was recorded as the thickness of the sample.

It is known that increased material thickness generally increases the rigidity as well. In particular, it is known that increasing the rigidity of a soundproof material results in a high sound-insulating property in the low frequency range (this is known as the "rigidity rule"). If the thickness is within this range, the nonwoven fabric will have a self-supporting property, and consequently a high sound-insulating property. The thickness of the nonwoven fabric is more preferably 0.1 mm or greater, even more preferably 0.5 mm or greater and most preferably 0.8 mm or greater. Since a larger thickness increases the rigidity, the upper limit is not particularly restricted but is preferably 100 mm or smaller from the viewpoint of handleability and post-processing such as pressing. It is more preferably 50 mm or smaller, even more preferably 10 mm or smaller and most preferably 5 mm or smaller.

The method for controlling the thickness may be by either of two methods: control based on the material itself or control by processing. A method of controlling the thickness based on the material itself may be control of the fibrillated fiber content, the fiber diameters of the non-fibrillated fibers, or the fiber type, such as increasing the fibrillated fiber content, thereby lowering the thickness due to closer bond distances between the staple fibers forming the lattice. By layering two or more nonwoven fabrics A, the thickness of the nonwoven fabric A as a whole can be increased.

(Unit thickness flow resistance of nonwoven fabric)

The unit thickness flow resistance of the nonwoven fabric is preferably 1,400,000 Ns/m$^4$ or greater. The "unit thickness flow resistance" referred to here is the resistance to flow of air in a material with a thickness of 1 m when air has flowed through the material. The unit thickness flow resistance of the nonwoven fabric was measured by the following procedure according to ISO9053, using a flow resistance system (AirReSys by Nihon Onkyo Engineering, Co., Ltd.). First, a predetermined number of φ42 mm circular discs were cut out from the nonwoven fabric. Air at a flow rate of 0.5 m/s was then flowed through the cut nonwoven fabric, the difference in pressure of the nonwoven fabric before and after was read off, and the results were standardized by dividing by the flow rate and the thickness of the nonwoven fabric. A higher unit thickness flow resistance corresponds to inhibited permeation of air, and an improved sound-insulating property of the material. The unit thickness flow resistance is preferably 4,300,000 Ns/m$^4$ or greater, more preferably 7,000,000 Ns/m$^4$ or greater, even more preferably 15,000,000 Ns/m$^4$ or greater, yet more preferably 42,000,000 Ns/m$^4$ or greater and most preferably 52,000,000 Ns/m$^4$ or greater. On the other hand, a high unit thickness flow resistance lowers the sound absorption coefficient of a material. When air passes through a nonwoven fabric, sound absorption in the nonwoven fabric occurs by a mechanism in which vibration is converted to thermal energy by friction between the air and fibers, thus reducing vibration. If the unit thickness flow resistance is too high, it becomes difficult for air to pass through the nonwoven fabric, and the sound absorption coefficient is lowered as a result. It is therefore preferably 5,500,000,000 Ns/m$^4$ or lower, more preferably 4,500,000,000 Ns/m$^4$ or lower, even more preferably 3,200,000,000 Ns/m$^4$ or lower and most preferably 1,500,000,000 Ns/m$^4$ or lower.

(Porosity of nonwoven fabric)

The porosity of the nonwoven fabric is preferably 96% or lower. The porosity referred to here is the proportion of air per unit volume of the nonwoven fabric, represented as a percentage. The porosity of the nonwoven fabric is therefore calculated using the bulk density and true density of the nonwoven fabric, according to the following formula:

$$\varepsilon\ [\%] = (1 - S_1/S_2) \times 100$$

{where ε: porosity, $S_1$: bulk density, $S_2$: true density}.

When two different materials have been mixed, the total value of their true densities multiplied by the volume ratio is recorded as the true density of the nonwoven fabric. A lower porosity reduces voids in the nonwoven fabric. Sound is associated with movement of air particles, and smaller voids in the gaps results in a more rapid particle velocity. A high particle velocity also results in efficient thermal energy conversion by friction between the air and the fibers in the nonwoven fabric, thus increasing the sound absorption coefficient. The porosity of the nonwoven fabric is more preferably 90% or lower and even more preferably 88% or lower. If the porosity is too low, the unit thickness flow resistance will be higher and the sound absorption coefficient of the material will be reduced, and therefore the lower limit is preferably 60% or higher, more preferably 70% or higher, even more preferably 73% or higher, yet more preferably 77% or higher and most preferably 82% or higher.

(Tortuosity of nonwoven fabric)

The tortuosity of the nonwoven fabric is preferably 1.8 or higher. The tortuosity referred to here is a parameter that expresses the ratio of the length of the pathway of a fluid flowing inside a nonwoven fabric with respect to the thickness of the nonwoven fabric. A higher tortuosity improves the sound absorption property of the material. As mentioned above, sound absorption in the nonwoven fabric occurs by thermal energy conversion by friction between the fibers and air vibration. High tortuosity increases the frequency of friction between the fibers and air, and as a result the sound absorption coefficient of the material is also increased. The tortuosity of the nonwoven fabric is more preferably 2.0 or higher, even more preferably 2.3 or higher and most preferably 3.2 or higher. If the tortuosity is too low the unit thickness flow resistance will be higher, resulting in a lower sound absorption coefficient of the material, and it is therefore preferably 10.0 or lower, more preferably 7.0 or lower, even more preferably 5.0 or lower, yet more preferably 4.5 or lower and most preferably 4.0 or lower.

The tortuosity of the nonwoven fabric was measured by the following procedure using a tortuosity and characteristic length measuring system (TORVITH by Nihon Onkyo Engineering, Co., Ltd.). First, a predetermined number of φ42 mm circular discs were cut out from the nonwoven fabric. Next, the sound velocity ratio between the sound velocity in the free space without the nonwoven fabric and the sound velocity of sound waves passing through the nonwoven fabric, was squared. Specifically, the time required for 300 kHz ultrasonic waves from a transmitter to reach a receiver was measured. The square of the sound velocity ratio due to the presence or absence of the nonwoven fabric has a frequency characteristic, and when the inverse of the square root of the frequency is plotted on the abscissa in the ultrasonic range, it is a straight line rising to the right. Since the tortuosity is defined as the value in the limit where frequency approaches infinity, it was calculated as the value of the y-intercept at that point.

(Fibrillated fibers)

Throughout the present specification, the term "fibrillated fibers" refers to fibers torn in the axial direction and fragmented to produce fluff. Fibrillated fibers are largely classified into two types: fibers without a branched structure that have been partially fractured by physical or chemical means, and fibers that have been fibrillated by intentionally creating fluff during spinning of the polymer compound. Examples of the former include microfibrillated cellulose (cellulose fibers that have been micronized using at least one type of physical or chemical means, and synonymous with the common names CNF, CeNF, cellulose nanofibers, MFC, cellulose fine fibers and cellulose microfilaments), synthetic pulp such as acryl pulp (polyacrylonitrile fibrillated fibers) and aramid pulp, as well as chitin nanofibers, chitosan nanofibers and silk nanofibers. An example of the latter is synthetic pulp produced by flash-spinning. Fibrillated fibers generally have a structure with partially narrowed fiber diameters compared to ordinary fibers without a branched structure, due to the method for their production. Fibrillated fibers consequently have larger surface area while also tending to have more of a curved structure. Due to these features, the fibrillated fibers in the nonwoven fabric of the embodiment exhibit an effect as a binder for joining together non-fibrillated fibers by physical entanglement. The properties of the nonwoven fabric may be affected by differences in the fibrillation index, fiber diameters and surface conditions, which depend on the type of fibrillated fibers, but preferably the fibrillated fibers are entangled together and the unit thickness flow resistance and tortuosity are increased. From this viewpoint, the fibrillated fibers used are preferably at least one type selected from the group consisting of microfibrillated cellulose, acrylic pulp, aramid pulp, chitin nanofibers, chitosan nanofibers and silk nanofibers. Regardless of the substances mentioned above, the fibers are preferably of a fibrous material composed of a polymer and having a melting point that is higher than the thermal decomposition initiation temperature, as this will tend to produce fibrillation.

(Fibrillation index of fibrillated fibers)

The fibrillation index of the fibrillated fibers in the nonwoven fabric is preferably 0.3% or higher. The fibrillation index referred to here is the ratio of the total value of the lengths of the branched fibers with respect to the lengths of the stems of the fibrillated fibers. Within this range the effect as a binder will be sufficient, and the nonwoven fabric will have a self-supporting property, with low shedding of the non-fibrillated fibers from the nonwoven fabric. Fibers narrowed by fibrillation also exhibit an effect of sound absorption in the low frequency range. The fibrillation index of the fibrillated fibers is more preferably 0.5% or higher, even more preferably 0.9% or higher, yet more preferably 2.1% or higher and most preferably 2.4 or higher. The upper limit for the fibrillation index is not particularly restricted but may be 100% or lower, or 10% or lower or 3% or lower.

The fibrillation index, average fiber length, mean fiber diameter (Method A) and fine content in area of the fibrillated fibers were measured by the following procedure using a fiber image analyzer (Morfi-Neo by TechPap), under conditions with a photograph time of 3 minutes (measured with at least 120,000 fibers). The minimum fiber length measured was 20 μm.

(1) Fibrillated fibers were dispersed in purified water to prepare a 1 L aqueous dispersion. The final solid concentration of the fibrillated fibers was 0.004 mass%. For an aqueous dispersion of fibrillated fibers at 2 mass% or lower, dispersion treatment was carried out by simple mixing with a spatula. For an aqueous dispersion, or a wet cake or powder at 2 mass% or greater, a high-shear homogenizer (trade name: ULTRA-TURRAX T18 by IKA Co.) was used for dispersion treatment with treatment conditions of 25,000 rpm × 5 min.

(2) The aqueous dispersion prepared in (1) was supplied to an autosampler for measurement.

(3) Based on the measurement results, the Mean Fibre Width, μm (or Fiber Mean Fiber Width, μm), Fine Fiber Mean

Length, μm, Macro Fibrillation Index, % (or Fiber Fibrillation Index, %) and Fine content in area, % (or Fine content, % in area) were read off and the mean fiber diameter (Method A), average fiber length, fibrillation index and fine content in area were recorded.

The fibrillation index, mean fiber diameter (Method A), average fiber length and fine content in area for the purpose of the invention can be measured in the slurry state before obtaining the nonwoven fabric (for example, the fibrillated fibers may be measured alone after being obtained). After mixing the fibrillated fibers and non-fibrillated fibers in a predetermined proportion, the fibrillated fibers may be separated off from the mixed slurry state by a method such as sifting or centrifugal separation, and then measured. The fibrillated fibers and non-fibrillated fibers may also be mixed, prepared into paper and dried to form a nonwoven fabric, and then the nonwoven fabric may be dispersed in water and the fibers disintegrated to separate off the fibrillated fibers by a method such as sifting or centrifugal separation, and then measured.

The methods for measuring the fibrillation index, average fiber length, mean fiber diameter (Method A) and fine content in area are described below, by separating out the fibrillated fibers from the mixed and papered dry nonwoven fabric, for example.

(1) After introducing 5 g of nonwoven fabric (dry product) and 300 g of purified water into a juicer mixer (Vitamix 1200i S), the mixture is stirred for 3 minutes under conditions with rotation level 1. The obtained dispersed water is poured into a stainless steel sieve (wire mesh diameter: φ150 μm, mesh opening: 300 μm, weave: plain weave, inner height: 45 mm), and the filtered dispersed water is recovered with a pan to obtain dispersed water with only the fibrillated fibers extracted.
(2) The dispersed water obtained in (1) above is prepared to a 1 L aqueous dispersion with a final solid concentration of 0.004 mass%, and a fiber image analyzer (Morfi-Neo by TechPap) is used for measurement under conditions with a photograph time of 3 minutes. The minimum fiber length measured is 20 μm. The minimum number of fibers that must be measured with a fiber image analyzer by this method is at least 500. The upper limit is not particularly restricted and may be up to 1,000.

(Average fiber length of fibrillated fibers)

The average fiber length of the fibrillated fibers in the nonwoven fabric is 25 μm or greater. The average fiber length is the number-average fiber length (Fine-Fiber Mean Length) of fibers of 20 μm or greater as measured using a fiber image analyzer (Morfi-Neo by TechPap). Within this range, the fibers will exhibit a sufficient effect as a binder. A longer average fiber length of the fibrillated fibers will facilitate crosslinking of the fibrillated fibers between the non-fibrillated fibers. Since crosslinking of the fibrillated fibers increases the rigidity of the nonwoven fabric as a binder, a greater number of crosslinked fibrillated fibers results in higher rigidity of the nonwoven fabric and a higher sound-insulating property in the low frequency range. A larger number of crosslinked fibrillated fibers also increases the unit thickness flow resistance and tortuosity of the nonwoven fabric, and improves the sound-insulating property of the nonwoven fabric. The non-crosslinked fibrillated fibers are present in a manner fitting around the outer periphery of the non-fibrillated fibers. The degree to which the non-crosslinked fibrillated fibers contribute to improved sound-insulating properties of the nonwoven fabric is less than that of the crosslinked fibrillated fibers. The average fiber length of the fibrillated fibers is more preferably 45 μm or greater. The upper limit for the average fiber length is preferably 200 μm or smaller in order to obtain a homogeneous molded article with excellent miscibility with the non-fibrillated fibers. A longer average fiber length results in a larger mean fiber diameter during the fibrillated fiber production steps, but a larger mean fiber diameter weakens entanglement between the fibrillated fibers and also reduces the effect as a binder. The upper limit for the average fiber length of the fibrillated fibers is therefore preferably 125 μm or smaller, more preferably 90 μm or smaller, even more preferably 65 μm or smaller and most preferably 55 μm or smaller.

(Fine content in area of fibrillated fibers)

The fine content in area of the fibrillated fibers in the nonwoven fabric is preferably 2% or greater. The fine content in area is the proportion of the total summed area of fine fibers in an observation image among the total summed area of all the fibers in the observation image (normal fiber area + fine fiber area), where "fine fibers" are fibers with fiber lengths of shorter than 100 μm. The method of measuring the fine content in area of the fibrillated fibers is as described above. As mentioned above, a longer average fiber length results in a larger mean fiber diameter during the fibrillated fiber production steps, but a larger mean fiber diameter weakens entanglement between the fibrillated fibers and also reduces the effect as a binder. With a fine content in area within this range, the effect as a binder will be sufficient, and the nonwoven fabric will have a self-supporting property, with low shedding of the non-fibrillated fibers from the nonwoven fabric. The fine content in area is more preferably 3% or greater, even more preferably 7% or greater, yet more preferably 8% or greater, especially preferably 9% or greater and most preferably 30% or greater. If normal fibers with fiber lengths of 100 μm or greater are present then the fine fibers will become entangled with the normal fibers as the main axis, and therefore a certain amount of normal fibers are preferably included. The upper limit for the fine content in area is therefore preferably 90% or lower, more preferably 50% or lower and even more preferably 40% or lower.

<Mean fiber diameter of fibrillated fibers by Method A>

The mean fiber diameter of the fibrillated fibers in the nonwoven fabric is primarily either the mean fiber diameter corresponding to the trunk fiber portions of the fibrillated fibers (mean fiber diameter by Method A), or the mean fiber diameter including the microfibrous portions up to the fibrillated ends (mean fiber diameter by Method B). The mean fiber diameter by Method A is preferably 50 μm or smaller. Within this range, the sizes of pores formed in the composite molded body will not be too small, and suitable air permeability will be obtained. The method of measuring the mean fiber diameter of the fibrillated fibers (Method A) is as described above. The mean fiber diameter of the fibrillated fibers by Method A is more preferably 20 μm or smaller, even more preferably 15 μm or smaller and most preferably 13 μm or smaller. The lower limit may be 1.5 μm or larger in terms of the resolving power of the apparatus. It is preferably 2.5 μm or larger from the viewpoint of freeness in wet papermaking and pulp molding methods, as methods for producing the nonwoven fabric described below.

<Mean fiber diameter of fibrillated fibers by Method B>

The mean fiber diameter of the fibrillated fibers in the nonwoven fabric by Method B is the mean fiber diameter including the microfibrous portions up to the fibrillated ends. The mean fiber diameter is preferably 1000 nm or smaller. Within this range, entanglement with the non-fibrillated fibers will be more likely to occur, thereby helping to inhibit shedding of the fibers from the nonwoven fabric. The mean fiber diameter of the fibrillated fibers as a whole by Method B is more preferably 800 nm or smaller, even more preferably 600 nm or smaller and most preferably 500 nm or smaller. The lower limit is not particularly restricted but is preferably 10 nm or larger, more preferably 20 nm or larger and even more preferably 30 nm or larger.

The mean fiber diameter of the fibrillated fibers (Method B) was measured by the following procedure using a specific surface area/pore distribution analyzer (NOVA-4200e by Quantachrome Instruments). Fibrillated fibers that aggregated by drying as fibrillated cellulose fine fibers were measured after the following pretreatment.

[Pretreatment]

(1) The fibrillated fine fiber aqueous dispersion was filtered to prepare a wet cake.
(2) The obtained wet cake was added to tert-butanol and diluted with tert-butanol to a fibrillated fiber solid concentration of 0.5 wt%, and a high-shear homogenizer (trade name: "ULTRA-TURRAX T18" by IKA Co.) was used for dispersion treatment with treatment conditions of 25,000 rpm × 5 min.
(3) The obtained dispersion was weighed out to a basis weight of 10 g/m$^3$ and filtered with filter paper to obtain a sheet.
(4) Without being released from the filter paper, the obtained sheet together with the filter paper was sandwiched by two larger filter paper sheets, and dried for 5 minutes in an oven at 150°C while pressing the edges of the filter paper with a weight from above, to obtain a porous sheet.

[Measurement of specific surface area and calculation of fiber diameter]

(1) The fibrillated fibers (porous sheet fabricated by pretreatment) in an amount of 0.2 g by solid content were dried in a vacuum at 120°C for 5 minutes.
(2) After drying, the adsorption of nitrogen gas at the boiling point of liquid nitrogen was measured at 5 points with a relative vapor pressure (P/P0) in the range of 0.05 to 0.2 (multipoint method), after which the BET specific surface area (m$^2$/g) was calculated by the program provided by the apparatus.
(3) The mean fiber diameter (Method B) was calculated from the BET specific surface area value Y (m$^2$/g) by the following formula:

$$\text{Mean fiber diameter (nm)} = 1/(2.5 \times \rho \times Y \times 10^{-4})$$

using the average fiber length X (nm) and the density $\rho$ (g/cm$^3$) of the fibrillated fibers.

(Cellulose starting material)

The fibrillated fibers used in the nonwoven fabric are preferably microfibrillated cellulose. The starting material for the microfibrillated cellulose may be a type I cellulose starting material, which includes wood pulp such as conifer pulp or hardwood pulp, and nonwood pulp. Examples of conifer pulp starting materials include fir, hemlock, Himalayan cedar, larch, ezo spruce, red pine, red ezo spruce, black pine, white pine, loblolly pine, spruce, cypress, sawara cypress, cedar, metasequoia, Japanese yew, umbrella pine, Hollywood juniper, goldcrest and blue ice. Examples of starting materials for hardwood pulp include eucalyptus, poplar, Japanese oak, oak, birch, beech, maple, chestnut, paulownia, white birch, elm and aspen. Nonwood pulp may be cotton pulp such as cotton linter pulp, or hemp pulp, bagasse pulp, kenaf pulp, bamboo pulp or straw pulp. Cotton pulp, hemp pulp, bagasse pulp, kenaf pulp, bamboo pulp and straw pulp are the refined pulp obtained from the respective starting materials of cotton lint, cotton linter, hemp abaca (usually from Ecuador or the Philippines), sisal, bagasse, kenaf, bamboo and straw, by refining steps such as delignification by digestion treatment and hemicellulose removal, and bleaching steps. Purified products of cellulose from bacteria such as acetic acid bacteria, seaweed cellulose or sea squirt cellulose may also be used as starting materials for cellulose fine fibers. Type II cellulose starting materials include cut yarns of regenerated cellulose fiber (such as rayon, lyocell and Bemberg), and cut yarns of cellulose derivative fibers, as well as pulp, for use as cellulose fine fiber starting materials, and cut yarns of regenerated cellulose or cellulose derivative superfine fibers obtained by electrospinning methods, for use as cellulose fine fiber starting materials or for cellulose fine fibers themselves. Such starting materials may be used alone or in mixtures of two or more different types. The mean fiber diameter can be adjusted by using multiple different starting materials in admixture.

(Crystalline form and degree of crystallinity)

As mentioned above, the crystalline forms of the cellulose are not uniform but are different crystalline forms, and they are largely classified as type I and type II cellulose. Of these, type I crystals exhibit high values for rigidity and thermal properties. In particular, it is known that increasing rigidity of a soundproof material results in a high sound-insulating property in the low frequency range. Type I crystals are therefore preferably included in the crystalline form of the cellulose of the fibrillated fibers used in the nonwoven fabric of the embodiment. In more accurate academic terms, type I cellulose crystals include the two types I$\alpha$ and I$\beta$, but the blending ratio of the I$\alpha$ and I$\beta$ types need not be considered here. A larger component proportion of crystals (degree of crystallinity) of the cellulose will also increase the rigidity of the microfibrillated cellulose. The degree of crystallinity is preferably 60% or higher and 100% or lower. The degree of crystallinity is more preferably 70% or higher, even more preferably 80% or higher, yet more preferably 85% or higher and most preferably 90% or higher. The degree of crystallinity is determined by X-ray diffraction, with the diffraction lines due to crystallinity forming peaks, and the scattered light due to amorphous form being detected as a halo. The peak and halo are fitted, and the degree of crystallinity is calculated by applying the following formula:

$$\text{Degree of crystallinity } [\%] = 100 \times \text{Ic}/(\text{Ic} + \text{Ia})$$

{where Ic: peak integrated scattering intensity, Ia: halo integrated scattering intensity}.

(Method for producing microfibrillated cellulose)

The starting material may be micronized to obtain microfibrillated cellulose. As used herein, "micronization" means controlling the fiber length, fiber diameter and fibrillation index while sizing down the cellulose. According to one aspect, the micronization treatment may be preceded by a pretreatment step. For a pretreatment step, it is effective for the starting pulp to be subjected to autoclave treatment or enzyme treatment, or a combination thereof, while impregnated with water at a temperature of 100°C to 150°C, for conversion to a state that is easily micronized. Such pretreatment has the effect of not only reducing the load in the micronization treatment, but also of causing impurity components such as lignin and hemicellulose, which are present on the surface and in the gaps of the microfibrils forming the cellulose fibers, to be discharged into the aqueous phase, increasing the $\alpha$-cellulose purity of the micronized fibers as a result, and it is therefore effective for increasing the heat resistance of the microfibrillated cellulose.

For micronization treatment, the starting pulp is dispersed in water and micronized using a publicly known micronization device such as a beater, single disc refiner, double disc refiner or high-pressure homogenizer. The treatment concentration suitable for micronization will differ depending on the device used, and may therefore be set as desired.

The fibrillation index, average fiber length and mean fiber diameter of the microfibrillated cellulose can be controlled by the cellulose starting material, the pretreatment conditions prior to micronization treatment (for example, autoclave treatment, enzymatic treatment or beating treatment), the conditions for micronization treatment (selection of the type of device, operating pressure and number of passes), or a combination of the foregoing. The cellulose starting material, pretreatment and micronization can also be controlled by a combination of multiple different conditions.

(Multistage micronization)

When the cellulose is to be micronized in multiple stages, it is effective to combine two or more micronization devices with different micronization mechanisms or shear rates. The method for multistage micronization is preferably multistage micronization using disc refiners with different disc constructions, or micronization with a high-pressure homogenizer after micronization with a disc refiner. The disc refiner used may be either a single disc refiner or a double disc refiner.

(Multistage micronization with multiple disc refiners)

For micronization in multiple stages using more than one disc refiner, it is preferred to use at least two refiners having different disc constructions. Using refiners with different disc constructions will allow control of the various shape parameters for the microfibrillated cellulose, i.e. the fibrillation index, average fiber length and mean fiber diameter.

(Disc refiner disc structure)

Modifying the disc structure of the disc refiner is an effective means for controlling the shape parameters of the microfibrillated cellulose. The important features of a disc refiner structure are the blade width, groove width and the blade/groove ratio (the blade width divided by the groove width), with the blade/groove ratio being most important for production of fibrillated fibers. If the blade/groove ratio is low the cutting action on the fibers will be larger, thus reducing the fiber lengths, while if the blade/groove ratio is high the action of grinding (beating) the fibers will be greater, thus increasing the fibrillation index. Since it is important for the nonwoven fabric of the embodiment of the embodiment to include fibrillated fibers, the blade/groove ratio is preferably 0.2 or higher, more preferably 0.4 or higher and most preferably 0.5 or higher. With a constant blade/groove ratio, smaller absolute values for the blade width and groove width will yield fine, homogeneous microfibrillated cellulose.

(Interblade distance for disc refiner treatment)

For micronization with a disc refiner, it is important to control the distance between the two discs (the rotary blade and fixed blade) (this will hereunder be referred to as the "interblade distance"). Controlling the interblade distance will allow control of the average fiber length of the microfibrillated cellulose, with a smaller interblade distance resulting in a smaller average fiber length. For pre-treatment, the interblade distance is preferably 0.05 mm to 2.0 mm, and for post-treatment the interblade distance is preferably 0.05 mm to 1.0 mm. When adjusting the interblade distance, preferably the interblade distance is gradually narrowed from a wide interblade distance to the target interblade distance, as such control will help to prevent clogging or overload of the device, and to yield cellulose fibers with a narrow distribution of fiber length and fiber diameter and high homogeneity.

(Number of passes in disc refiner treatment)

The degree of micronization can also be controlled by the number of times the cellulose passes through the disc section (hereunder referred to as "number of passes"). By increasing the number of passes it is possible to obtain cellulose fibers having a uniform distribution of fiber diameter and fiber length. The "number of passes", for the purpose of the present specification, is the number of times refiner treatment is carried out after the interblade distance has been set to the target value. The number of passes of the disc refiner is preferably 5 times or more, more preferably 20 times or more and even more preferably 40 times or more. A greater number of times is preferred since the distribution of fiber shapes will gradually converge to be constant, but from the standpoint of productivity, the upper limit for the number of passes is 300 times or less.

(Method for controlling number of passes in disc refiner treatment)

The method for controlling the number of passes may be a method in which one tank is used for each refiner, and the slurry is circulated alone, controlling the number of passes based on the flow rate, or a method in which two tanks are used for each refiner, and the slurry is reciprocated between tanks while carrying out refiner treatment. The former method allows the equipment to be simplified. In the latter case, the cellulose reliably passes through the disc section during each treatment, allowing microfibrillated cellulose with higher homogeneity to be obtained.

(Multistage micronization by combination of disc refiner and high-pressure homogenizer)

Another preferred aspect is micronization treatment of the disc refiner-micronized cellulose fibers, using a high-pressure homogenizer. A high-pressure homogenizer has a greater effect of narrowing fibers than a disc refiner, and its combination with micronization using a disc refiner can yield narrow elongated cellulose fibers.

(Method for producing synthetic pulp)

Synthetic pulp can be obtained by a spin draw process on a prepared polymer, a flash-spinning method from a solution or emulsion, a strip fiber method by uniaxial stretching of a film, or a shear polymerization method in which a monomer is polymerized under shearing stress. Acrylic pulp may be BiPUL (registered trademark of Japan Exlan Co., Ltd.) and aramid pulp may be Kevlar (registered trademark of DuPont Corp.) or TIARA (registered trademark of Daicel Miraizu, Ltd.). Synthetic pulp may also be produced by high-pressure homogenizer treatment, in the same manner as micronized cellulose.

(Non-fibrillated fibers)

The nonwoven fabric of the embodiment includes non-fibrillated fibers in addition to fibrillated fibers. As used herein, "non-fibrillated fibers" means fibers made of a fibrous material and having fibers without a branched structure. The non-fibrillated fibers used may be natural fibers, synthetic fibers, semisynthetic fibers or inorganic fibers. Examples of polymers composing non-fibrillated fibers include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins, and cellulose, chitin and chitosan. Examples of inorganic materials composing non-fibrillated fibers include glass, ceramics, cement, metals, carbon fibers, slag, carbon nanotubes and graphene. Since a higher rigidity of the nonwoven fabric will result in a higher sound-insulating property in the low frequency range, it preferably includes at least one type of material selected from the group consisting of inorganic materials. Glass, metal and carbon fibers are more preferred from the viewpoint of workability into fiber shapes. Glass is also particularly preferred from the viewpoint of facilitating compositing with the fibrillated fibers.

The types of glass that may be suitably used include soda lime glass, borosilicate glass, potassium glass, crystal glass, optical glass, quartz glass, polarized glass, multilayer glass (economy glass), reinforced glass, combined glass, heat-resistant glass, borosilicate glass, bulletproof glass, glass fiber, photocatalytic cleaning glass, water glass, uranium glass, acrylic glass, dichroic glass, goldstone/tea-goldstone/sand-goldstone/purple-goldstone glass, glass ceramic, low melting point glass, metal glass, saphiret glass, phase-separated glass, porous glass, liquid-type glass, liquid glass, glass coating materials, hybrid glass (a glassy composite which is a silicate compound in which a silicone resin (a silicon compound), and a silanol compound, along with a thermoplastic resin, are chemically cross-linked at multiple functional groups, being formed by softening at 120-180 degrees in the normal temperature range followed by rapid cooling), and natural glass (obsidian, tektite, moldavite, meteorite glass, volcanic glass, fulgurite, trinitite and Pele's hair). Glass is normally an amorphous material without a crystal structure, but dissolution at a constant high temperature for prolonged periods allows the structure to be divided and crystallized, an example being crystallized glass (glass ceramic) obtained by homogenizing such crystals.

Glass fibers to be used for the invention include E glass fibers (non-alkaline glass), S glass fibers (containing more alumina ($Al_2O_3$) than E glass, and also more magnesium oxide in addition to alumina), C glass fibers (containing alkaline glass), ECR glass fibers (containing no boron ($B_2O_3$) or fluorine ($F_2$)) and AR glass fibers (containing more zirconia ($ZrO_2$)). These may be used alone or in combinations of more than one. Preferred glass fibers from the viewpoint of compositing with fibrillated fibers include E glass fibers and S glass fibers. E glass fibers are more preferred.

Examples of types of carbon fibers include PAN-based carbon fibers obtained by carbonization of a PAN precursor (polyacrylonitrile fibers), and pitch-based carbon fibers obtained by carbonization of a pitch precursor (pitch fibers obtained using coal tar or heavy petroleum components as the starting material). Of these, pitch-based carbon fibers have wide surfaces on the carbon layer surfaces composing the fibers, which are arranged parallel to the fiber axis directions, and thus have a higher elastic modulus than PAN-based carbon fibers. Pitched carbon fibers are therefore preferred from the viewpoint of improving the elastic modulus of the nonwoven fabric itself.

Such non-fibrillated fibers may be used alone or in combinations of more than one.

(Mean fiber diameter of non-fibrillated fibers)

The non-fibrillated fibers have a mean fiber diameter of preferably 0.1 μm or greater. The mean fiber diameter of the non-fibrillated fibers was measured by the following procedure.

(1) The weight [g] of non-fibrillated fibers with lengths of 1,000 m was measured in terms of [tex].
(2) The tex was converted to mean fiber diameter by the following formula:

$$\text{Mean fiber diameter } [\mu m] = 2 \times [T \times 1{,}000/(S \times \pi)]^{0.5}$$

{where T: Tex [tex], S: true density of material [g/cm$^3$]}.

If the mean fiber diameter of the non-fibrillated fibers is less than 0.1 μm, they will fail to be uniformly mixed when mixed with the fibrillated fibers, and it will not be possible to obtain a nonwoven fabric with a sufficiently micronized interior. A larger mean fiber diameter of the non-fibrillated fibers increases the rigidity of the fibers themselves and also increases the rigidity of the nonwoven fabric, and therefore high sound-insulating properties are exhibited in the low frequency range as according to the rigidity rule. The mean fiber diameter of the non-fibrillated fibers is more preferably 1 μm or greater, even more preferably 3 μm or greater and most preferably 5 μm or greater.

Examples of methods for producing a nonwoven fabric include the wet papermaking method described below (also known as "papermaking"), and pulp molding methods, and using such production methods causes the fibrillated fibers to crosslink between the fibers of the non-fibrillated fibers while being entangled in a complex manner. Since crosslinking of the fibrillated fibers increases the rigidity of the nonwoven fabric as a binder, a greater number of crosslinked fibrillated fibers results in higher rigidity of the nonwoven fabric and a higher sound-insulating property in the low frequency range, according to the rigidity rule. A larger number of crosslinked fibrillated fibers also increases the unit thickness flow resistance and tortuosity of the nonwoven fabric, and improves the sound-insulating property of the nonwoven fabric. If the mean fiber diameter of the non-fibrillated fibers is increased, the number of non-fibrillated fibers per unit volume is reduced, thus reducing the number of crosslinkable fibrillated fibers. The non-crosslinked fibrillated fibers are then present in a manner fitting around the outer periphery of the non-fibrillated fibers. The degree to which the non-crosslinked fibrillated fibers contribute to improved sound-insulating properties of the nonwoven fabric is less than that of the crosslinked fibrillated fibers. The mean fiber diameter of the non-fibrillated fibers is therefore preferably 300 μm or smaller, more preferably 150 μm or smaller and even more preferably 30 μm or smaller.

(Fiber lengths of non-fibrillated fibers)

The fiber lengths (also known as the cut lengths) of the non-fibrillated fibers are preferably 1 mm or greater. Three-dimensional molding will be further facilitated within this range, helping to obtain a more homogeneous nonwoven fabric and a more uniform sound-insulating effect. A long fiber length will also increase the rigidity of the nonwoven fabric, and therefore the fiber length of the non-fibrillated fibers is more preferably 3 mm or greater and even more preferably 5 mm or greater. The upper limit is preferably 30 mm or less from the viewpoint of moldability of the nonwoven fabric.

(Tensile modulus of non-fibrillated fibers)

The tensile modulus of the non-fibrillated fibers is preferably 1 GPa or higher. The tensile modulus (also known as Young's modulus) referred to here is represented as the ratio between tensile stress per unit cross-sectional area and the elongation produced in the stress direction, and it corresponds to the dimensional stability (resistance to deformation) of the material. If the tensile modulus of the non-fibrillated fibers is high, the rigidity of the nonwoven fabric will be increased, and high sound-insulating properties will be exhibited in the low frequency range. The tensile modulus for the non-fibrillated fibers is preferably 5 GPa or higher, more preferably 10 GPa or higher, even more preferably 70 GPa or higher, especially preferably 190 GPa or higher and most preferably 300 GPa or higher. The upper limit is not particularly restricted, but as one aspect it is preferably 1,000 GPa or lower, and more preferably 500 GPa or lower. The tensile modulus is measured by the following method using a TENSILON universal material tester (RTG-1250, A&D Co., Ltd.) using a fiber length allowing measurement of the same material (according to JIS L 1013:2010,8.5.1 (Standard time test)). A non-fibrillated fiber was attached to the grip section of the tester while in a loosely stretched state and subjected to a tensile test, measuring the load and elongation at the moment of breakage of the sample, and calculating the strength and ductility by the following formula, with the number-average value being recorded as the strength (average strength) and ductility for the sample. When the breaking strength is smaller than the strength at maximum load, the strength at maximum load and the elongation at that moment are measured.

Strength (cN/dtex) = Strength at breakage or strength at maximum load (cN)/sample fineness (dtex) Ductility (%) = {Elongation at breakage or elongation at maximum load (mm)/grip spacing (mm)} × 100

The measuring conditions were as follows:

    Number of measuring samples: 10 points
    Pull rate: 300 mm/min (constant speed)
    Load cell type: UR-50N-D
    Chuck distance: 300 mm
    Chuck pressure: 0.20 MPa
    Environmental temperature: 25°C
    Environmental humidity: 55%

The tensile modulus of the non-fibrillated fibers may be measured by first mixing the fibrillated fibers and non-fibrillated fibers in a predetermined proportion, and then separating off the non-fibrillated fibers from the mixed slurry state by a method such as sifting or centrifugal separation. The fibrillated fibers and non-fibrillated fibers may also be mixed, prepared into paper and dried to form a nonwoven fabric, and then the nonwoven fabric may be dispersed in water and the fibers subsequently disintegrated, separating off the non-fibrillated fibers by a method such as sifting or centrifugal separation, prior to measurement. Measurement may also be carried out by directly pulling out non-fibrillated fibers from a nonwoven fabric using a pincette or adhesive tape.

(Fibrillated fiber content)

The nonwoven fabric preferably contains fibrillated fibers at 1 mass% or greater and 100 mass% or lower, based on the total mass of the nonwoven fabric. Within this range, the fibrillated fibers will be able to further contribute to sound absorption in the low frequency range. By including numerous fibrillated fibers, the strength of the nonwoven fabric is increased and shedding of the fibers from the surface is reduced. Since the unit thickness flow resistance is also increased, the sound-insulating property is improved. From the same viewpoint, the content is more preferably 1 mass% or greater, even more preferably 3 mass% or greater, yet more preferably 5 mass% or greater and most preferably 10 mass% or greater. However, since an excessively high fibrillated fiber content will reduce handleability due to excessive rigidity and will lower the sound absorption coefficient caused by excessive unit thickness flow resistance, the content is preferably 90 mass% or lower and more preferably 30 mass% or lower.

(Tensile modulus of nonwoven fabric)

The tensile modulus of the nonwoven fabric is preferably 10 MPa or greater. If the tensile modulus is within this range, the nonwoven fabric will exhibit a sound-insulating property in the low frequency range according to the rigidity rule. The tensile modulus is preferably 40 MPa or greater, more preferably 50 MPa or greater, even more preferably 100 MPa or greater, especially preferably 200 MPa or greater, most especially 240 MPa or greater and most preferably 300 MPa or greater. The upper limit is not particularly restricted and may be 100 GPa or lower, or 500 MPa, as one aspect. The tensile modulus is calculated under the following conditions using a TENSILON universal material tester (RTG-1250 by A&D Co., Ltd.).

    Number of measuring samples: 10 points
    Pull rate: 10 mm/min (constant speed)
    Type of jig: parallel-clamping air jaw
    Load cell type: UR-1kN-D
    Chuck distance: 100 mm
    Chuck pressure: 0.48 MPa
    Environmental temperature: 25°C
    Environmental humidity: 50%
    Test piece shape: strip
    Test strip width: 15 mm
    Test strip length: 150 mm
    Test piece thickness: Same as nonwoven fabric thickness

(Bulk density of nonwoven fabric)

The bulk density of the nonwoven fabric is preferably 30 kg/m³ or higher. If the bulk density is within this range it will be possible to obtain suitable air permeability to facilitate the sound absorption effect. The bulk density is more preferably 100 kg/m³ or higher, even more preferably 200 kg/m³ or higher and most preferably 300 kg/m³ or higher. If the bulk density of the nonwoven fabric is too large, the unit thickness flow resistance will also be too high, while the sound absorption effect will be impaired. The upper limit for the bulk density is preferably 10,000 kg/m³ or lower, more preferably 5,000 kg/m³ or lower, even more preferably 1000 kg/m³ or lower and most preferably 500 kg/m³ or lower.

The bulk density of the nonwoven fabric is calculated by the following formula.

$$\text{Bulk density } [\text{kg/m}^3] = \text{Surface density } [\text{g/m}^2]/\text{thickness } [\text{mm}]$$

The surface density of the nonwoven fabric was recorded as the surface density determined by measuring the weight of the nonwoven fabric cut out to 25 cm-square using an electronic scale (GX-8K2 by A&D Co., Ltd.), and multiplying by 16. The thickness of the nonwoven fabric was calculated by the method described above.

When the bulk density is equal to the surface density, it can be controlled by adjusting the material thickness, the material thickness being adjustable by the method described above.

(Three-dimensional shaping of nonwoven fabric)

The nonwoven fabric can be easily formed into a three-dimensional structure, to form a structure having a homogeneous surface and being free of seams or gaps. The term "three-dimensional structure" as used herein means a structure for the nonwoven fabric that is not two-dimensional (planar or flat), but instead has at least a curved structure (hereunder also referred to as either "three-dimensional" or "spatial structure").

When a flat air permeability-modifying layer such as a commonly used nonwoven fabric is applied in a three-dimensional structure, the air permeability-modifying layer is disposed on the sound-absorbing material surface via cutting, bending and attaching, during which time partial creation of an overlapping structure, or gaps and folds, in the nonwoven fabric become unavoidable. This produces variation in the air permeability, making it impossible to obtain homogeneous sound absorption properties over all of the surfaces. If the nonwoven fabric is processed three-dimensionally, however, the surface becomes uniform with a structure lacking seams or gaps, so that consistent sound absorption properties can be obtained on all surfaces of the nonwoven fabric, even applied against a sound source with complex waveforms, for an excellent overall sound absorption property.

(Method for producing nonwoven fabric)

The method for producing the nonwoven fabric is not particularly restricted, and may be a method that includes dispersing the fibrillated fibers and non-fibrillated fibers in a liquid medium, and removal and drying of the solvent by filtration and pressing. Mixing the non-fibrillated fibers and fibrillated fibers in a liquid medium allows a nonwoven fabric with a more homogeneous internal structure to be obtained. A molding method as described above makes processing possible into any desired shape, preferably by a wet papermaking method or pulp molding method. Using a wet papermaking method can yield a two-dimensional flat molded article (i.e. a "nonwoven fabric"), while using a pulp molding method allows shaping into complex three-dimensional shapes. Several different pulp molding methods exist which are suitable depending on the desired molded article. Such methods include the Thick Wall method, in which a molded article having high load resistance is obtained with a very large film thickness of 5 mm to 10 mm, the Transfer Mold method, in which a smooth molded article having a surface with a film thickness of 3 mm to 5 mm is obtained, the Thermoformed Mold method, in which a complex shape with a film thickness of 1 mm to 3 mm is obtained, the PIM (Pulp Injection Mold) method, in which a complex shape is obtained using a boss or rib, as for ordinary plastic molded articles, and the PF (Pulp Forming) method, in which a lightweight, soft molded article is obtained by foaming in a die. Other systems not within this classification may also be employed, so long as they allow three-dimensional shaping. Various additives may also be added to the liquid medium during molding.

(Liquid medium during molding)

The liquid medium used for molding is not particularly restricted, and a publicly known liquid medium such as water or an organic solvent may be used. While it is preferred to use water in consideration of handleability and low environmental load, a non-polar organic solvent with lower surface tension may be used for the purpose of preventing aggregation when drying and lowering the air permeability resistance per unit thickness. When water is used as the liquid medium, a surfactant may also be added to control the surface tension.

(Molding additives)

By adding a papermaking dispersant or binder and a crosslinking agent as an additive during molding, it is possible to control the handleability, including strength and fiber shedding, as well as the interior uniformity and surface smoothness, of the nonwoven fabric. A papermaking dispersant is a surfactant used to facilitate defibration of the bundled fibrillated fibers in a liquid medium, or a viscous agent used to adjust the viscosity of the liquid medium and prevent aggregation of the fibers, and it allows control of the air permeability resistance per unit thickness by improving the smoothness or homogeneity of the surface and providing uniformity in the internal structure. It should be noted that the added surfactant will also affect the surface tension of the liquid medium. A binder is an adhesive component such as starch, and it adheres together the fibers to allow control of the structural strength and air permeability resistance per unit thickness. A crosslinking agent is an isocyanate or polyurethane, which by chemically or physically crosslinking the intertwined points of the fibers can prevent shedding of the fibers and adjust their strength. When a material having a hydrophilic functional group such as a hydroxyl, carbonyl, carboxyl or amino group is used as the fibrillated fibers or non-fibrillated fibers of the nonwoven fabric, repeated moisture absorption in the air can result in aggregation of the fibers, producing changes in the microstructure of the nonwoven fabric. By constraining the fibers with a crosslinking agent it is possible to stop such movement of the fibers and inhibit aggregation. Such additives may be used alone or in combinations of two or more.

(Blackening of nonwoven fabric)

Automobile parts are preferred to be black in color so that fouling is less visible. The method of blackening the nonwoven fabric may be black staining of at least one type of non-fibrillated fiber among the fibrillated fibers. Methods for blackening fibrillated fibers and non-fibrillated fibers include methods of coating black materials onto the fibers, and methods of pre-adding black materials into the fibers. Examples of coloring materials include black powders such as carbon black, titanium-based black pigments, iron oxide powder, titanium oxynitride powder and lower-oxidation titanium oxide powder, as well as black fibers such as carbon fibers and carbon nanotubes. From the viewpoint of blackening of the nonwoven fabric it is preferred to blacken both the fibrillated fibers and non-fibrillated fibers, but from the viewpoint of cost and labor efficiency, only either one of them may be blackened. In this case it is preferably the non-fibrillated fibers that are blackened, from among the fibrillated fibers and non-fibrillated fibers, from the viewpoint of ease of dyeing and lower dye usage.

(Application of flame retardant to nonwoven fabric)

From the viewpoint of safety, an automobile part is preferably a material with high flame retardance to protect against occurrence of fire. The nonwoven fabric of the embodiment can be given increased flame retardance by applying a flame retardant. The method of applying the flame retardant to the nonwoven fabric may be a method in which the flame retardant is dispersed in a liquid and applied by blasting, brush painting, coating, pouring, soaking, immersion or the like. In addition, during production of the nonwoven fabric, the non-fibrillated fibers and fibrillated fibers may be pre-dispersed in the liquid medium with a flame retardant to form a nonwoven fabric with the flame retardant adhering to it. The type of flame retardant may be a halogen-based flame retardant, phosphorus-based flame retardant, nitrogen-based flame retardant or inorganic flame retardant. Specific halogen-based flame retardants include chlorinated paraffins, cyclic aliphatic chlorine compounds (Dechlorane Plus), aliphatic bromine compounds and aromatic bromine compounds. Phosphorus-based flame retardants include phosphoric acid esters (monomer types and condensation types), halogen-containing phosphoric acid esters, phosphinic acid metal salts, intumescent flame retardants (IFR), red phosphorus, APP (ammonium polyphosphate), melamine phosphate and esteramide phosphate. Nitrogen-based flame retardants include melamines, melamine derivatives and guanidine compounds. Inorganic flame retardants include magnesium hydroxide, aluminum hydroxide, antimony compounds ($Sb_2O_3$), tin compounds (zinc stannate and zinc hydroxylstannate), boron compounds (zinc borate) MMT, zirconium compounds and molybdenum compounds (molybdenum oxide). Others in addition to these include silicone-based flame retardants, hindered amine compounds and azoalkane compounds. Of these, phosphorus-based flame retardants characteristically form carbonized coatings (char) on material surfaces by dehydrating action, and block oxygen and heat. A nonwoven fabric with a phosphorus-based flame retardant therefore preferably employs the phosphorus-based flame retardant to help prevent the spread of flames when fire has occurred inside or outside the vehicle.

<Layering of nonwoven fabric and support>

By layering with a support, the nonwoven fabric of the embodiment exhibits a higher sound-insulating property. The nonwoven fabric has a sound-insulating property, but the nonwoven fabric itself also vibrates vigorously in the frequency range of the natural frequency of the nonwoven fabric, generating secondary frequency sounds. Therefore, the sound-insulating property is lower in the frequency range of the natural frequency of the nonwoven fabric, compared to the other frequency ranges.

When a support is layered with the nonwoven fabric, however, it is possible to maintain a high sound-insulating property throughout all frequency ranges since the support suppresses vibration of the nonwoven fabric itself. The type of support may be a plate membrane or porous body. A plate membrane will have a higher effect of suppressing vibration of the nonwoven fabric compared to a porous body, and the plate membrane itself will also function as a sound-insulating material, thus resulting in a multilayer body with a specialized sound-insulating property. A porous body, on the other hand, has a lower sound-insulating property than a plate membrane, but also has a higher sound absorption property. When a porous body is layered, therefore, the porous body contributes to soundproofness as a sound-absorbing material, thus providing a composite laminate with both a sound absorption property and a sound-insulating property.

When a plate membrane is to be layered as the support, the nonwoven fabric is preferably disposed on the side of the plate membrane closer to the sound source. Although the plate membrane itself has virtually no sound absorption property, since the nonwoven fabric does have a sound absorption property, sound exiting from the sound source is insulated by the plate membrane and the nonwoven fabric while sound is absorbed by the nonwoven fabric on the sound-facing side, thus producing a multilayer body with a high sound-insulating property.

<Support material type>

As mentioned above, the support of the embodiment is primarily either a plate membrane or a porous body. Examples of materials to compose a plate membrane include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, and thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins. Examples include inorganic materials such as glass, ceramics, cement, metals and slag. Additional examples include rubber materials, cellulose, fiber-reinforced resins (reinforcing materials: cellulose fibers, glass fibers, aramid fibers, carbon fibers and particle-reinforced resins.

For a porous body, the fibers composing a nonwoven fabric or felt may be natural fibers, synthetic fibers, semisynthetic fibers or inorganic fibers. Examples of polymers to compose a porous body include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, and thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins. Examples of inorganic materials to compose non-fibrillated fibers include glass, ceramics, cement, metals, carbon fibers and slag. Such fibers may be used alone or in combinations of more than one. For a porous body, examples of materials to compose a foamed body include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, and thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins.

<Tensile modulus of plate membrane>

The tensile modulus of a plate membrane, as a support of the embodiment, is preferably 0.5 GPa or higher. A plate membrane is self-supporting within this range, and will therefore exhibit an effect as a support for the nonwoven fabric. A higher tensile modulus of the plate membrane can inhibit vibration of the nonwoven fabric, thus also improving the sound-insulating property of the multilayer. The tensile modulus of the plate membrane is more preferably 1 GPa or higher, even more preferably 5 GPa or higher and most preferably 10 GPa or higher. The upper limit is not particularly restricted and may be 1000 GPa, as one aspect.

<Method of laminating nonwoven fabric onto support>

The nonwoven fabric of the embodiment may be laminated with the support by any of a variety of different means. The laminating method may be simply natural overlapping without bonding between the nonwoven fabric and support, but they are preferably bonded since bonding causes the support to function as a binder for the nonwoven fabric, thereby suppressing vibration of the nonwoven fabric and improving the sound-insulating property. Examples of methods for bonding both together include a method of heating only the surface of the nonwoven fabric with an IR heater, for joining by heat fusion, a method of coating the nonwoven fabric surface with a hot-melt adhesive using a curtain spray system, and then heating for heat fusion, and a method of anchoring with commercially available adhesive tape.

Incidentally, a higher bonding strength prevents detachment from the porous body by vibration action when the nonwoven fabric vibrates due to sound transmission. The tensile shear strength (according to JIS K6849) is preferably 1 MPa or higher and more preferably 5 MPa or higher. The upper limit is not particularly restricted and may be 1 GPa or lower, as one aspect.

<Uses>

While the use of two-dimensional sheet-like nonwoven fabrics as sound-absorbing materials is publicly known technology, three-dimensional molding of the fibrillated fibers or non-fibrillated fibers of this embodiment in a seamless manner by a method such as pulp molding can provide a three-dimensional nonwoven fabric exhibiting both sound insulation and sound absorption performance. In particular, using cellulose as the fiber material allows three-dimensional molding into thin layers, and since a high elastic modulus is exhibited it can be used as a three-dimensional soundproof material with a high sound-insulating property particularly in the low frequency range. Moreover the high moldability allows following of complex mechanical shapes such as sound source devices. The excellent heat resistance exhibited is particularly useful for automobile uses, which include the following.

Suitable uses for automobiles may be as large parts such as a hood silencer, dash outer silencer, dash inner silencer (dash panel pad), fender liner, wheel house liner, cowl inner silencer, dash inner silencer, side door trim, luggage door trim, luggage side trim, luggage mat, floor silencer (floor under cover or floor carpet), engine silencer, head lining, rear shelf, tailgate trim, soundproof duct, Melsheet, transmission insulator or engine under cover (or a motor under cover for an EV), or for smaller three-dimensional covers, as a cover for a drive unit such as an engine, engine-mounted reduction gear, drive shaft, torque converter, gear shifter, speed reduction device, differential gear or limited slip differential, a cover for electrical equipment such as an electric pump (for water or oil circulation), air conditioning electric compressor, air conditioner duct, electric actuator, inverter or converter, and for EVs in particular, as a cover for an electric drive unit such as an electric motor or motor-mounted reduction gear. Since the soundproof material of the invention allows three-dimensional molding in a thin-layer in a seamless manner, it is more suitable for a smaller-sized three-dimensional cover, and can be used as a cover for electrical equipment such as an electric pump (for water or oil circulation), air conditioning electric compressor, air conditioner duct, electric actuator, inverter or converter, or as a cover for an electric drive unit such as an electric motor or motor-mounted reduction gear, as devices that generate noise vibrations at 200 Hz to 2000 Hz.

EXAMPLES

The present invention will now be explained in greater detail using Examples and Comparative Examples, with the understanding that the invention is not limited to the Examples.

The measuring methods will be explained first.

<Self-supporting and fiber shedding properties of nonwoven fabric>

For each of the Examples and Comparative Examples, a 20 cm-square sample was prepared, and the self-supporting property and fiber shedding of the nonwoven fabric were evaluated based on the following scale.

[Self-supporting property]

G: No bending or breaking when handled with one hand
F: Bending, but no damage when handled with one hand.
P: Tearing when handled with one hand

[Fiber shedding]

G: No adhesion of shed fibers when surface is touched or rubbed with a bare hand
F: Adhesion of shed fibers when surface is rubbed with a bare hand, but no adhesion of shed fibers with touching alone
P: Adhesion of shed fibers when surface is touched with a bare hand

<Evaluation of sound-insulating property>

For each of the Examples and Comparative Examples, a WinZac normal incident sound absorption coefficient/-transmission loss measuring system (product of Nihon Onkyo Engineering, Co., Ltd.) was used, based on the two-load method, to measure the transmission loss of the sample and evaluate the sound-insulating property. The inner diameter of the acoustic tube was measured to be 40 mm. White noise was used as the sound source. For the multilayer of the nonwoven fabric and porous body, measurement was carried out so that the nonwoven fabric was on the incident side of the sound wave.

<Fibrillated fibers>

<Fibrillated fibers A>

Fibrillated fibers of polyacrylonitrile (BiPUL, product of Japan Exlan Co., Ltd., 18% solid mass) were used as fibrillated fibers A. The results of evaluating the fibrillation index, fine content in area, average fiber length and mean fiber diameter are shown in Table 1 below.

<Fibrillated fibers B>

Fibrillated fibers of aramid pulp (Kevlar, product of DuPont) were used as fibrillated fibers B. The results of evaluating the fibrillation index, fine content in area, average fiber length and mean fiber diameter are shown in Table 1 below.

<Fibrillated fibers C>

Linter pulp, as type I natural cellulose acquired from Japan Pulp and Paper Co., was immersed in water to a linter pulp content of 2 mass%, and a Labo Pulper (Aikawa Iron Works Co.) was used for simple dispersion, followed by delivery to a tank and dilution to 1.5 mass%. The slurry was micronized while circulating with a 14-inch single disc refiner (Aikawa Iron Works Co.) equipped with a disc having a 2.5 mm blade width and a 7.0 mm groove width, connected to the tank. Operation was initiated with an interblade distance of 2.0 mm, gradually narrowing the interblade distance to a final interblade distance of 0.05 mm. After the interblade distance reached 0.05 mm, operation was continued while confirming the flow rate, and operation was stopped when the total amount of slurry had passed through the disc section 30 times. The obtained microfibrillated cellulose was used as fibrillated fibers C. The results of evaluating the fibrillation index, fine content in area, average fiber length and mean fiber diameter are shown in Tables 2 and 3 below.

<Fibrillated fibers D>

Fibrillated fibers C were subjected to further micronization treatment using a high-pressure homogenizer (NS015H by Niro Soavi). The slurry was treated in a batch process with five treatments. The obtained fibrillated fibers were used as fibrillated fibers D. The results of evaluating the fibrillation index, fine content in area, average fiber length and mean fiber diameter are shown in Table 3 below.

<Fibrillated fibers E>

Linter pulp, as type I natural cellulose acquired from Japan Pulp and Paper Co., was immersed in water to a linter pulp content of 2 mass%, and a Labo Pulper (Aikawa Iron Works Co.) was used for simple dispersion, followed by delivery to a tank and dilution to 1.5 mass%. The slurry was micronized while circulating with a 14-inch single disc refiner (Aikawa Iron Works Co.) equipped with a disc having a 2.5 mm blade width and a 7.0 mm groove width, connected to the tank. Operation was initiated with an interblade distance of 2.0 mm, gradually narrowing the interblade distance to a final interblade distance of 0.15 mm. After the interblade distance reached 0.15 mm, operation was continued while confirming the flow rate, and operation was stopped when the total amount of slurry had passed through the disc section 30 times. The obtained microfibrillated cellulose was used as fibrillated fibers E. The results of evaluating the fibrillation index, fine content in area, average fiber length and mean fiber diameter are shown in Table 2 below.

<Fibrillated fibers F>

Linter pulp, as type I natural cellulose acquired from Japan Pulp and Paper Co., was immersed in water to a linter pulp content of 2 mass%, and a Labo Pulper (Aikawa Iron Works Co.) was used for simple dispersion, followed by delivery to a tank and dilution to 1.5 mass%. The slurry was micronized while circulating with a 14-inch single disc refiner (Aikawa Iron Works Co.) equipped with a disc having a 2.5 mm blade width and a 7.0 mm groove width, connected to the tank. Operation was initiated with an interblade distance of 2.0 mm, gradually narrowing the interblade distance to a final interblade distance of 0.30 mm. After the interblade distance reached 0.30 mm, operation was continued while confirming the flow rate, and operation was stopped when the total amount of slurry had passed through the disc section 30 times. The obtained microfibrillated cellulose was used as fibrillated fibers F. The results of evaluating the fibrillation index, fine content in area, average fiber length and mean fiber diameter are shown in Table 2 below.

<Fibrillated fibers G>

Linter pulp, as type I natural cellulose acquired from Japan Pulp and Paper Co., was immersed in water to a linter pulp content of 1.5 mass%, and a juicer mixer (HBH450 by Transgate Co.) was used for simple dispersion under the conditions: High, 5 min. The obtained microfibrillated cellulose was used as fibrillated fibers G. The results of evaluating the fibrillation index, fine content in area, average fiber length and mean fiber diameter are shown in Table 2 below.

<Production Examples for soundproof material>

<Example 1>

Fibrillated fibers A as fibrillated fibers, and glass fibers A (ECS 03-670, product of Central Glass Co., Ltd., mean fiber diameter: 13 $\mu$m, cut length: 3 mm) as non-fibrillated fibers, were used to fabricate nonwoven fabric 1 by the following procedure. The fibrillated fibers and non-fibrillated fibers were added to purified water in a solid weight ratio of 10:90 to a final solid concentration of 0.5%, and the mixture was stirred with a household mixer for 4 minutes to prepare a slurry. The prepared slurry was loaded into in a batch paper machine (automatic square sheet machine by Kumagai Riki Kogyo Co., Ltd., 25 cm $\times$ 25 cm, 80 mesh) in which a filter cloth (TT35 by Shikishima Canvas Co., Ltd.) was set, to a surface density of 300 g/m$^2$, after which paper-making (dewatering) was carried out with pressure reduction of 50 KPa relative to atmospheric pressure. The aforementioned filter cloth was used to cover the surface of the wet concentrated composition on a filter cloth, and was detached from the wire and pressed for 1 minute at a pressure of 1 kg/cm$^2$. It was then dried for about 120 seconds in a drum dryer set to a surface temperature of 130°C, to obtain nonwoven fabric 1. The physical properties and soundproof property of the obtained nonwoven fabric 1 are shown in Table 1.

<Example 2>

Nonwoven fabric 2 was obtained by the same method as Example 1, except that fibrillated fibers B were used as the fibrillated fibers. The physical properties and soundproof property of the obtained nonwoven fabric 2 are shown in Table 1.

<Example 3>

Nonwoven fabric 3 was obtained by the same method as Example 1, except that fibrillated fibers C were used as the fibrillated fibers, glass fibers B (ECS 03 T-289DE, product of Nippon Electric Glass Co., Ltd., mean fiber diameter: 6.5 $\mu$m, cut length: 3.2 mm) were used as the non-fibrillated fibers, and the solid weight ratio was 20:80. The physical properties and soundproof property of the obtained nonwoven fabric 3 are shown in Table 1.

<Example 4>

Nonwoven fabric 4 was obtained by the same method as Example 1, except that fibrillated fibers C were used as the fibrillated fibers, glass fibers B were used as the non-fibrillated fibers, and the solid weight ratio was 30:70. The physical properties and soundproof property of the obtained nonwoven fabric 4 are shown in Table 1.

<Example 5>

Nonwoven fabric 5 was obtained by the same method as Example 1, except that fibrillated fibers C were used as the fibrillated fibers. The physical properties and soundproof property of the obtained nonwoven fabric 5 are shown in Table 1.

<Example 6>

Nonwoven fabric 6 was obtained by the same method as Example 1, except that fibrillated fibers C were used as the fibrillated fibers, and the solid weight ratio of the fibrillated fibers and non-fibrillated fibers was 15:85. The physical properties and soundproof property of the obtained nonwoven fabric 6 are shown in Table 1.

<Example 7>

Nonwoven fabric 7 was obtained by the same method as Example 1, except that fibrillated fibers C were used as the fibrillated fibers, and the solid weight ratio of the fibrillated fibers and non-fibrillated fibers was 20:80. The physical properties and soundproof property of the obtained nonwoven fabric 7 are shown in Table 1.

<Example 8>

Nonwoven fabric 8 was obtained by the same method as Example 1, except that fibrillated fibers C were used as the fibrillated fibers, and the solid weight ratio of the fibrillated fibers and non-fibrillated fibers was 30:70. The physical properties and soundproof property of the obtained nonwoven fabric 8 are shown in Table 2.

<Example 9>

Nonwoven fabric 9 was obtained by the same method as Example 1, except that fibrillated fibers C were used as the fibrillated fibers, carbon fibers (TR03CM, product of Mitsubishi Chemical Holdings Corp., mean fiber diameter: 7 $\mu$m, cut length: 3 mm) were used as the non-fibrillated fibers, and the solid weight ratio was 30:70. The physical properties and soundproof property of the obtained nonwoven fabric 9 are shown in Table 2.

<Example 10>

Nonwoven fabric 10 was obtained by the same method as Example 1, except that fibrillated fibers C were used as the fibrillated fibers, glass fibers C (ECS 06-670, product of Central Glass Co., Ltd., mean fiber diameter: 13 $\mu$m, cut length: 6 mm) were used as the non-fibrillated fibers, and the solid weight ratio was 30:70. The physical properties and soundproof property of the obtained nonwoven fabric 10 are shown in Table 2.

<Example 11>

Nonwoven fabric 11 was obtained by the same method as Example 1, except that fibrillated fibers C were used as the fibrillated fibers, and stainless steel fibers (commercially available stainless steel wool cut to 20 mm length, mean fiber diameter: 150 $\mu$m, cut length: 20 mm) were used as the non-fibrillated fibers. The physical properties and soundproof property of the obtained nonwoven fabric 11 are shown in Table 2.

<Example 12>

Nonwoven fabric 12 was obtained by the same method as Example 1, except that fibrillated fibers E were used as the fibrillated fibers. The physical properties and soundproof property of the obtained nonwoven fabric 12 are shown in Table 2.

<Example 13>

Nonwoven fabric 13 was obtained by the same method as Example 1, except that fibrillated fibers F were used as the fibrillated fibers. The physical properties and soundproof property of the obtained nonwoven fabric 13 are shown in Table 2.

<Example 14>

Nonwoven fabric 14 was obtained by the same method as Example 1, except that fibrillated fibers G were used as the fibrillated fibers. The physical properties and soundproof property of the obtained nonwoven fabric 14 are shown in Table 2.

<Example 15>

Nonwoven fabric 15 was obtained by the same method as Example 1, except that fibrillated fibers C were used as the fibrillated fibers, PET fibers (TA04PN by Teijin, Ltd., mean fiber diameter: 3 μm, cut length: 3 mm) were used as the non-fibrillated fibers, and the solid weight ratio was 5:95. The physical properties and soundproof property of the obtained nonwoven fabric 15 are shown in Table 3.

<Example 16>

Nonwoven fabric 16 was obtained by the same method as Example 1, except that fibrillated fibers C were used as the fibrillated fibers, and PET fibers (TA04PN by Teijin, Ltd., mean fiber diameter: 3 μm, cut length: 3 mm) were used as the non-fibrillated fibers. The physical properties and soundproof property of the obtained nonwoven fabric 16 are shown in Table 3.

<Example 17>

Nonwoven fabric 17 was obtained by the same method as Example 1, except that fibrillated fibers C were used as the fibrillated fibers, and PP fibers (AIRYMO by Ube Exsymo Inc., mean fiber diameter: 5.3 μm, cut length: 2 mm) were used as the non-fibrillated fibers. The physical properties and soundproof property of the obtained nonwoven fabric 17 are shown in Table 3.

<Example 18>

Nonwoven fabric 18 was obtained by the same method as Example 1, except that fibrillated fibers D were used as the fibrillated fibers. The physical properties and soundproof property of the obtained nonwoven fabric 18 are shown in Table 3.

<Example 19>

Nonwoven fabric 19 was obtained by the same method as Example 1, except that no non-fibrillated fibers were used, using only fibrillated fibers G (fibrillated fiber:non-fibrillated fiber solid weight ratio = 100:0). The physical properties and soundproof property of the obtained nonwoven fabric 19 are shown in Table 3.

<Comparative Example 1>

In a 2 L glass beaker there were loaded 10 g dry mass of bleached Kraft pulp (Machenzie, product of Fletcher Challenge, Canada) and 500 ml of ion-exchanged water, and the mixture was allowed to stand overnight for swelling of the pulp. This was adjusted to 30.0°C with a temperature-adjustable water bath, and 0.1 g of TEMPO (98%, Tokyo Kasei Kogyo Co., Ltd.) and 1 g of sodium bromide (Wako Pure Chemical Industries, Ltd.) were added and the mixture was stirred to prepare a pulp suspension. Sodium hypochlorite (Cl: 5%, by Wako Pure Chemical Industries, Ltd.) was further added at 5 mmol/g per mass of cellulose while continuing to stir. An approximately 1 M aqueous sodium hydroxide solution was added to keep the pH of the pulp suspension at about 10.5. Reaction was then conducted for 2 hours, and the pulp was thoroughly washed with ion-exchanged water to obtain TEMPO-oxidized cellulose. The TEMPO-oxidized cellulose consisted of non-fibrillated fibers.

A nonwoven fabric 20 was obtained by the same method as Example 1, except that the TEMPO-oxidized cellulose and glass fibers A were used in a solid weight ratio of 10:90. The physical properties and soundproof property of the obtained nonwoven fabric 20 are shown in Table 3. The fiber diameters of the TEMPO-oxidized cellulose were not observed since they were below the measurement limit of the fiber image analyzer (Morfi-Neo by TechPap). The average fiber length was therefore calculated as the average value for 100 TEMPO-oxidized cellulose fibers using a scanning electron microscope. The mean fiber diameter was calculated by Method B alone.

<Comparative Example 2>

Nonwoven fabric 21 was obtained by the same method as Example 1, except that no fibrillated fibers were used, using only glass fibers A as non-fibrillated fibers. The physical properties and soundproof property of the obtained nonwoven fabric 21 are shown in Table 3.

<Example 20>

A 2-bolt gear-reduction electric motor (product of FastUU, 12 V250W electric motor heavy-duty DC gear-reduction brush motor, with 9-tooth sprocket) was anchored to a 10 mm SUS stage, and noise A (600 Hz) was measured 5 minutes after rotating at 2950 rpm. Next, the electric motor and reduction gear were provided with a 5 mm air-gap, following the shape, and fibrillated fibers G were used to prepare a 1 mm-thick molded cover A by pulp molding. The cover was set and rotated at 2950 rpm, and then noise B was measured after 5 minutes. The transmission loss was determined from noise A and B to be 7 dB.

<Example 21>

A 2-bolt gear-reduction electric motor (product of FastUU, 12 V250W electric motor heavy-duty DC gear-reduction brush motor, with 9-tooth sprocket) was anchored to a 10 mm SUS stage, and noise A (600 Hz) was measured 5 minutes after rotating at 2950 rpm. Next, the electric motor and reduction gear were provided with a 5 mm air-gap, following the shape, and a 1 mm-thick molded cover A was prepared by pulp molding, with the composition of nonwoven fabric 16 of Example 16. The cover was set and rotated at 2950 rpm, and then noise B was measured after 5 minutes. The transmission loss was determined from noise A and B to be 10 dB.

<Comparative Example 4>

A 2-bolt gear-reduction electric motor (product of FastUU, 12 V250W electric motor heavy-duty DC gear-reduction brush motor, with 9-tooth sprocket) was anchored to a 10 mm SUS stage, and noise A (600 Hz) was measured 5 minutes after rotating at 2950 rpm. Next, the electric motor and reduction gear were provided with a 5 mm air-gap, following the shape, and PET fibers (TA04PN by Teijin, Ltd., mean fiber diameter: 3 $\mu$m, cut length: 3 mm) were used to prepare a 1 mm-thick molded cover A by pulp molding. The cover was set and rotated at 2950 rpm, and then noise B was measured after 5 minutes. The transmission loss was determined from noise A and B to be 2 dB.

[Table 1]

| Name | | Example 1 | Example 2 | Example 3 | Example 4 | Example 5 | Example 6 | Example 7 |
|---|---|---|---|---|---|---|---|---|
| | | Nonwoven fabric 1 | Nonwoven fabric 2 | Nonwoven fabric 3 | Nonwoven fabric 4 | Nonwoven fabric 5 | Nonwoven fabric 6 | Nonwoven fabric 7 |
| Surface density | g/m$^2$ | 315 | 322 | 311 | 289 | 285 | 301 | 291 |
| Thickness | mm | 1.12 | 1.03 | 0.82 | 0.75 | 0.92 | 0.84 | 0.83 |
| Bulk density | kg/m$^3$ | 281 | 313 | 379 | 385 | 310 | 358 | 351 |
| Elastic modulus | MPa | 57 | 65 | 222 | 320 | 96 | 180 | 242 |
| Unit thickness flow resistance | Ns/m$^4$ | 4.50E+06 | 3.20E+06 | 3.60E+07 | 9.20E+07 | 4.50E+06 | 1.30E+07 | 2.80E+07 |
| Tortuosity | - | 2.2 | 2.8 | 3.2 | 4.5 | 1.8 | 2.4 | 2.6 |
| Porosity | % | 88.1 | 86.9 | 83.5 | 82.5 | 87.1 | 84.8 | 84.8 |
| Fibrillated fibers | - | A | B | C | C | C | C | C |

(continued)

| | | Example 1 | Example 2 | Example 3 | Example 4 | Example 5 | Example 6 | Example 7 |
|---|---|---|---|---|---|---|---|---|
| Name | | Nonwoven fabric 1 | Nonwoven fabric 2 | Nonwoven fabric 3 | Nonwoven fabric 4 | Nonwoven fabric 5 | Nonwoven fabric 6 | Nonwoven fabric 7 |
| Average fiber length of fibrillated fibers | μm | 95 | 120 | 48 | 48 | 48 | 48 | 48 |
| Mean fiber diameter of fibrillated fibers (Method A) | μm | 21 | 22 | 12 | 12 | 12 | 12 | 12 |
| Mean fiber diameter of fibrillated fibers (Method B) | nm | 521 | 624 | 42 | 42 | 42 | 42 | 42 |
| Fibrillation index of fibrillated fibers | % | 0.85 | 0.92 | 2.42 | 2.42 | 2.42 | 2.42 | 2.42 |
| Fine content in area of fibrillated fibers | % | 8.2 | 7.4 | 36.6 | 36.6 | 36.6 | 36.6 | 36.6 |
| Fibrillated fiber content | mass% | 10 | 10 | 20 | 30 | 10 | 15 | 20 |
| Non-fibrillated fibers | - | Glass fibers A | Glass fibers A | Glass fibers B | Glass fibers B | Glass fibers A | Glass fibers A | Glass fibers A |
| Elastic modulus of non-fibrillated fibers | GPa | 75 | 75 | 75 | 75 | 75 | 75 | 75 |
| Fiber length of non-fibrillated fibers | mm | 3.0 | 3.0 | 3.2 | 3.2 | 3.0 | 3.0 | 3.0 |
| Fiber diameter of non-fibrillated fibers | μm | 13.0 | 13.0 | 6.5 | 6.5 | 13.0 | 13.0 | 13.0 |
| 200 Hz | dB | 22 | 25 | 30 | 31 | 26 | 29 | 30 |
| 500 Hz | dB | 14 | 17 | 23 | 23 | 19 | 23 | 26 |
| 1000 Hz | dB | 5 | 8 | 12 | 12 | 8 | 11 | 12 |
| 2000 Hz | dB | 10 | 11 | 12 | 13 | 10 | 10 | 12 |
| Standard deviation | | 7.2 | 7.5 | 8.8 | 9.0 | 8.3 | 9.3 | 9.4 |
| Mean | | 12.8 | 15.2 | 19.2 | 19.8 | 15.8 | 18.2 | 20.0 |

(continued)

|  |  | Example 1 | Example 2 | Example 3 | Example 4 | Example 5 | Example 6 | Example 7 |
|---|---|---|---|---|---|---|---|---|
| Name |  | Nonwoven fabric 1 | Nonwoven fabric 2 | Nonwoven fabric 3 | Nonwoven fabric 4 | Nonwoven fabric 5 | Nonwoven fabric 6 | Nonwoven fabric 7 |
| Coefficient of variation |  | 56.3 | 49.2 | 46.0 | 45.5 | 53.0 | 50.9 | 46.9 |
| Self-supporting property of nonwoven fabric | - | G | G | G | G | G | G | G |
| Fiber shedding of nonwoven fabric | - | G | G | G | G | G | G | G |

[Table 2]

|  |  | Example 8 | Example 9 | Example 10 | Example 11 | Example 12 | Example 13 | Example 14 |
|---|---|---|---|---|---|---|---|---|
| Name |  | Nonwoven fabric 8 | Nonwoven fabric 9 | Nonwoven fabric 10 | Nonwoven fabric 11 | Nonwoven fabric 12 | Nonwoven fabric 13 | Nonwoven fabric 14 |
| Surface density | $g/m^2$ | 271 | 320 | 320 | 380 | 312 | 312 | 324 |
| Thickness | mm | 0.82 | 0.95 | 0.87 | 0.8 | 0.95 | 1.04 | 0.95 |
| Bulk density | $kg/m^3$ | 330 | 337 | 368 | 475 | 328 | 300 | 341 |
| Elastic modulus | MPa | 320 | 420 | 326 | 326 | 87 | 76 | 12 |
| Unit thickness flow resistance | $Ns/m^4$ | 6.50E+07 | 3.80E+07 | 5.20E+07 | 7.10E+05 | 4.30E+06 | 4.30E+06 | 9.30E+05 |
| Tortuosity | - | 3.9 | 3.9 | 4.5 | 1.8 | 1.6 | 1.6 | 1.5 |
| Porosity | % | 85.0 | 80.3 | 83.3 | 93.3 | 86.3 | 87.5 | 85.8 |
| Fibrillated fibers | - | C | C | C | C | E | F | G |
| Average fiber length of fibrillated fibers | $\mu$m | 48 | 48 | 48 | 48 | 64 | 87 | 123 |
| Mean fiber diameter of fibrillated fibers (Method A) | $\mu$m | 12 | 12 | 12 | 12 | 15 | 19 | 20 |
| Mean fiber diameter of fibrillated fibers (Method B) | nm | 42 | 42 | 42 | 42 | 86 | 120 | - |

(continued)

| | | Example 8 | Example 9 | Example 10 | Example 11 | Example 12 | Example 13 | Example 14 |
|---|---|---|---|---|---|---|---|---|
| Name | | Nonwoven fabric 8 | Nonwoven fabric 9 | Nonwoven fabric 10 | Nonwoven fabric 11 | Nonwoven fabric 12 | Nonwoven fabric 13 | Nonwoven fabric 14 |
| Fibrillation index of fibrillated fibers | % | 2.42 | 2.42 | 2.42 | 2.42 | 2.01 | 2.2 | 2.1 |
| Fine content in area of fibrillated fibers | % | 36.6 | 36.6 | 36.6 | 36.6 | 9.7 | 3 | 2.1 |
| Fibrillated fiber content | mass% | 30 | 30 | 30 | 10 | 10 | 10 | 10 |
| Non-fibrillated fibers | - | Glass fibers A | Carbon fibers | Glass fibers C | Stainless steel fibers | Glass fibers A | Glass fibers A | Glass fibers A |
| Elastic modulus of non-fibrillated fibers | GPa | 75 | 300 | 75 | 190 | 75 | 75 | 75 |
| Fiber length of non-fibrillated fibers | mm | 3.0 | 7.0 | 6.0 | 20.0 | 3.0 | 3.0 | 3.0 |
| Fiber diameter of non-fibrillated fibers | $\mu$m | 13.0 | 3.0 | 13.0 | 150.0 | 13.0 | 13.0 | 13.0 |
| 200 Hz | dB | 34 | 36 | 35 | 22 | 24 | 20 | 12 |
| 500 Hz | dB | 27 | 30 | 26 | 14 | 15 | 13 | 5 |
| 1000 Hz | dB | 18 | 21 | 18 | 6 | 8 | 8 | 5 |
| 2000 Hz | dB | 5 | 7 | 5 | 18 | 18 | 16 | 10 |
| Standard deviation | | 12.5 | 12.6 | 12.7 | 6.8 | 6.7 | 5.1 | 3.6 |
| Mean | | 21.0 | 23.5 | 21.0 | 15.0 | 16.2 | 14.2 | 8.0 |
| Coefficient of variation | | 59.6 | 53.7 | 60.6 | 45.5 | 40.9 | 35.5 | 44.5 |
| Self-supporting property of nonwoven fabric | - | G | G | G | G | G | G | G |
| Fiber shedding of nonwoven fabric | - | G | G | G | G | G | G | G |

[Table 3]

| | | Example 15 | Example 16 | Example 17 | Example 18 | Example 19 | Comp. Example 1 | Comp. Example 2 |
|---|---|---|---|---|---|---|---|---|
| Name | | Nonwoven fabric 15 | Nonwoven fabric 16 | Nonwoven fabric 17 | Nonwoven fabric 18 | Nonwoven fabric 19 | Nonwoven fabric 20 | Nonwoven fabric 21 |
| Surface density | g/m$^2$ | 347 | 327 | 245 | 320 | 308 | 320 | 203 |
| Thickness | mm | 1.16 | 1.04 | 1.16 | 0.78 | 0.95 | 4.9 | 1.02 |
| Bulk density | kg/m$^3$ | 299 | 314 | 211 | 410 | 324 | 65 | 199 |
| Elastic modulus | MPa | 46 | 86 | 42 | 45 | 24 | 8 | 2 |
| Unit thickness flow resistance | Ns/m$^4$ | 1.49E+07 | 5.20E+07 | 1.49E+07 | 7.10E+06 | 1.24E+06 | 4.10E+00 | 5.30E+03 |
| Tortuosity | - | 1.46 | 2.32 | 1.2 | 4.9 | 1.8 | 1.3 | 1.1 |
| Porosity | % | 78.4 | 77.4 | 77.3 | 82.9 | 86.2 | 97.3 | 92.0 |
| Fibrillated fibers | - | C | C | C | D | G | - | - |
| Average fiber length of fibrillated fibers | μm | 48 | 48 | 48 | 21 | 123 | 3 | - |
| Mean fiber diameter of fibrillated fibers (Method A) | μm | 12 | 12 | 12 | 8 | 20 | - | - |
| Mean fiber diameter of fibrillated fibers (Method B) | nm | 42 | 42 | 42 | 32 | - | 4 | - |
| Fibrillation index of fibrillated fibers | % | 2.42 | 2.42 | 2.42 | 1.6 | 2.1 | - | - |
| Fine content in area of fibrillated fibers | % | 36.6 | 36.6 | 36.6 | 40.3 | 2.1 | - | - |
| Fibrillated fiber content | mass% | 5 | 10 | 10 | 10 | 10 | 10 | 0 |
| Non-fibrillated fibers | - | PET fibers | PET fibers | PP fibers | Glass fibers A | - | TEMPO cellulose oxide/glass fibers A | Glass fibers A |

(continued)

| Name | | Example 15 | Example 16 | Example 17 | Example 18 | Example 19 | Comp. Example 1 | Comp. Example 2 |
|---|---|---|---|---|---|---|---|---|
| | | Nonwoven fabric 15 | Nonwoven fabric 16 | Nonwoven fabric 17 | Nonwoven fabric 18 | Nonwoven fabric 19 | Nonwoven fabric 20 | Nonwoven fabric 21 |
| Elastic modulus of non-fibrillated fibers | GPa | 5 | 5 | 1 | 75 | - | 75 | 75 |
| Fiber length of non-fibrillated fibers | mm | 3.0 | 3.0 | 2.0 | 3.0 | - | 3.0 | 3.0 |
| Fiber dia-meter of non-fibril-lated fibers | $\mu$m | 3.0 | 3.0 | 5.3 | 13.0 | - | 3.0 | 13.0 |
| 200 Hz | dB | 16 | 23 | 12 | 16 | 13 | 7 | 4 |
| 500 Hz | dB | 8 | 14 | 8 | 8 | 7 | 8 | 5 |
| 1000 Hz | dB | 7 | 7 | 8 | 6 | 6 | 10 | 7 |
| 2000 Hz | dB | 18 | 19 | 10 | 17 | 10 | 11 | 9 |
| Standard deviation | | 5.6 | 6.9 | 1.9 | 5.6 | 3.2 | 1.8 | 2.2 |
| Mean | | 12.2 | 15.8 | 9.5 | 11.8 | 9.0 | 9.0 | 6.2 |
| Coefficient of variation | | 45.4 | 43.8 | 20.2 | 47.3 | 35.1 | 20.3 | 35.5 |
| Self-supporting property of nonwoven fabric | - | F | G | G | G | G | P | P |
| Fiber shedding of nonwoven fabric | - | F | G | G | G | G | P | P |

INDUSTRIAL APPLICABILITY

The nonwoven fabric of the invention exhibits sound absorption performance while having an excellent sound-insulating property in a wide frequency range from 200 Hz to 2000 Hz, and it can therefore be suitably used as a sound-absorbing material to suppress various types of noise, such as engine or drive system noise, road noise or wind noise in automobiles, and to thereby create a more comfortable indoor automobile space.

**Claims**

1.    A nonwoven fabric having a tensile modulus of 10 MPa or higher, and comprising fibrillated fibers.

2.    The nonwoven fabric according to claim 1, which further comprises non-fibrillated fibers.

3.    The nonwoven fabric according to claim 1 or 2, wherein the average fiber length of the fibrillated fibers is 25 $\mu$m or greater.

4. The nonwoven fabric according to claim 2, wherein the tensile modulus of the non-fibrillated fibers is 5 GPa or higher.

5. The nonwoven fabric according to claim 1 or 2, wherein the unit thickness flow resistance is 1,400,000 Ns/m$^4$ to 5,000,000,000 Ns/m$^4$.

6. The nonwoven fabric according to claim 1 or 2, wherein the tortuosity is 1.8 to 12.0.

7. The nonwoven fabric according to claim 1 or 2, wherein the fibrillated fibers are one or more selected from the group consisting of microfibrillated cellulose, acrylic pulp, aramid pulp, chitin nanofibers, chitosan nanofibers and silk nanofibers.

8. The nonwoven fabric according to claim 1 or 2, wherein the fibrillation index of the fibrillated fibers is 0.3% or greater.

9. The nonwoven fabric according to claim 1 or 2, wherein the fibrillated fiber content is 3 mass% to 30 mass% based on the total mass of the nonwoven fabric.

10. The nonwoven fabric according to claim 1 or 2, wherein the average fiber length of the fibrillated fibers is 200 $\mu$m or smaller.

11. The nonwoven fabric according to claim 1 or 2, wherein the tensile modulus is 40 MPa to 1000 MPa.

12. The nonwoven fabric according to claim 2, wherein the tensile modulus of the non-fibrillated fibers is 500 GPa or higher.

13. A soundproof material comprising a nonwoven fabric according to claim 1 or 2.

14. A composite soundproof material obtained by layering a soundproof material according to claim 13 with a support.

15. The soundproof material according to claim 13, which is a three-dimensional soundproof material for an automobile.

16. The soundproof material according to claim 14, which is a three-dimensional soundproof material for an automobile.

## INTERNATIONAL SEARCH REPORT

| International application No. |
| --- |
| **PCT/JP2023/044397** |

### A. CLASSIFICATION OF SUBJECT MATTER

**D21H 11/18**(2006.01)i; **B32B 29/00**(2006.01)i; **D04H 1/4391**(2012.01)i; **D21H 15/02**(2006.01)i; **G10K 11/162**(2006.01)i
FI:  D21H11/18; B32B29/00; D04H1/4391; D21H15/02; G10K11/162

According to International Patent Classification (IPC) or to both national classification and IPC

### B. FIELDS SEARCHED

Minimum documentation searched (classification system followed by classification symbols)

D21H11/18; B32B29/00; D04H1/4391; D21H15/02; G10K11/162

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2021-165454 A (ASAHI KASEI KABUSHIKI KAISHA) 14 October 2021 (2021-10-14) claims 1, 32, 34, paragraphs [0027], [0028], [0118], [0123], [0190], [0194], examples | 1-11, 13-16 |
| A | claims 1, 32, 34, paragraphs [0027], [0028], [0118], [0123], [0190], [0194], examples | 12 |
| X | JP 2022-065937 A (ASAHI KASEI KABUSHIKI KAISHA) 28 April 2022 (2022-04-28) claims, examples | 1-11, 13-16 |
| A | claims, examples | 12 |
| X | JP 2020-020060 A (OJI HOLDINGS CORPORATION) 06 February 2020 (2020-02-06) claims, paragraph [0015], examples | 1-3, 7-10 |
| A | claims, paragraph [0015], examples | 4-6, 11-16 |
| X | JP 2021-006666 A (DAIO PAPER CORPORATION) 21 January 2021 (2021-01-21) claims, examples | 1-3, 7, 8, 10 |
| A | claims, examples | 4-6, 9, 11-16 |

☑ Further documents are listed in the continuation of Box C.    ☑ See patent family annex.

| | |
| --- | --- |
| \*  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **09 February 2024** | **20 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/044397**

### C. DOCUMENTS CONSIDERED TO BE RELEVANT

| Category* | Citation of document, with indication, where appropriate, of the relevant passages | Relevant to claim No. |
|---|---|---|
| X | JP 2019-509403 A (ECOINNO (H.K.) LIMITED) 04 April 2019 (2019-04-04) claims 1, 23 | 1-3, 7, 8 |
| A | claims 1, 23 | 4-6, 9-16 |
| X | JP 6-33398 A (PIONEER CORPORATION) 08 February 1994 (1994-02-08) claims, examples | 1-11, 13, 14 |
| A | claims, examples | 12, 15, 16 |
| A | JP 2004-232137 A (OKAYAMA PREFECTURE) 19 August 2004 (2004-08-19) entire text, all drawings | 1-16 |

Form PCT/ISA/210 (second sheet) (July 2022)

**INTERNATIONAL SEARCH REPORT**
**Information on patent family members**

International application No.

**PCT/JP2023/044397**

| Patent document cited in search report | | | Publication date (day/month/year) | Patent family member(s) | | | Publication date (day/month/year) |
|---|---|---|---|---|---|---|---|
| JP | 2021-165454 | A | 14 October 2021 | (Family: none) | | | |
| JP | 2022-065937 | A | 28 April 2022 | (Family: none) | | | |
| JP | 2020-020060 | A | 06 February 2020 | (Family: none) | | | |
| JP | 2021-006666 | A | 21 January 2021 | (Family: none) | | | |
| JP | 2019-509403 | A | 04 April 2019 | US | 2019/0062998 | A1 | |
| | | | | claims 1, 23 | | | |
| | | | | WO | 2017/144009 | A1 | |
| | | | | EP | 3419437 | A1 | |
| | | | | CA | 3014093 | A | |
| | | | | AU | 2017222026 | A | |
| | | | | CN | 117087255 | A | |
| JP | 6-33398 | A | 08 February 1994 | (Family: none) | | | |
| JP | 2004-232137 | A | 19 August 2004 | (Family: none) | | | |

Form PCT/ISA/210 (patent family annex) (July 2022)

**EP 4 636 158 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018154113 A
- WO 2017006993 A